# EUROPEAN PATENT SPECIFICATION

(11) **EP 2 085 265 B1**
(45) Date of publication and mention of the grant of the patent: **18.08.2010**
(21) Application number: 09151144.4
(22) Date of filing: 22.01.2009
(51) Int. Cl.: B60R 3/02

(54) **A retractable step for motor vehicles**
Einziehbare Stufe für Motorfahrzeuge
Marche rétractable pour véhicules à moteur

(30) Priority: 29.01.2008 IT RE20080011
(43) Date of publication of application: 05.08.2009
(73) Proprietor: Stem S.r.l., 43014 Medesano (PR) (IT)
(72) Inventor: Menna, Ezio c/o Stem S.r.l., 43014, Medesano (Parma) (IT)
(74) Representative: Corradini, Corrado

(56) References cited:
- FR-A- 2 864 935
- JP-A- 4 372 434
- JP-A- 9 095 182
- US-A1- 2006 255 558

## Description

The invention relates to a mechanised retractable step for motor vehicles, in particular motor ambulances, or for other vehicles, such as buses, campers, i.e. vehicles where a floor surface thereof is located at a relatively large distance from the ground.

The prior art comprises retractable steps comprising a footstep tread constrained to the vehicle such as to be mobile between a projecting position beyond the perimeter of the vehicle, and a retracted position internally of the vehicle perimeter, and comprising means for bringing the tread into the projecting position (typically when the vehicle door is opened), and for retracting the tread (when the vehicle door is closed).

The steps are constrained to the vehicle by means of a four-bar linkage system activated by mechanical actuators.

JP 09 095182A discloses a mechanised retracting step for motor vehicles, comprising a tread constrained to the vehicle comprising first means for pushing the tread into download position and second means to pull the tread towards the retracted position, wherein hooking means for engaging the tread when it reaches the retracted position and command means for unhooking the mobile element are provided

A technical problem connected to the steps is the relative high consumption of electrical energy for its activation. It is important to reduce as far as possible the absorption of current in vehicles as the progressively larger number of electrical devices installed, especially on vehicles for emergency use in transportation of patients, often create problems caused by excessive energy absorption.

A further technical problem relates to the need to stop the tread from coming out when it encounters an obstacle, in order to prevent its injuring people or damaging things.

These problems and others besides are resolved by the present invention as it is characterised in the claims.

The invention is described in detail with the aid of the accompanying figures of the drawings, which illustrate an embodiment thereof purely by way of non-exclusive example.

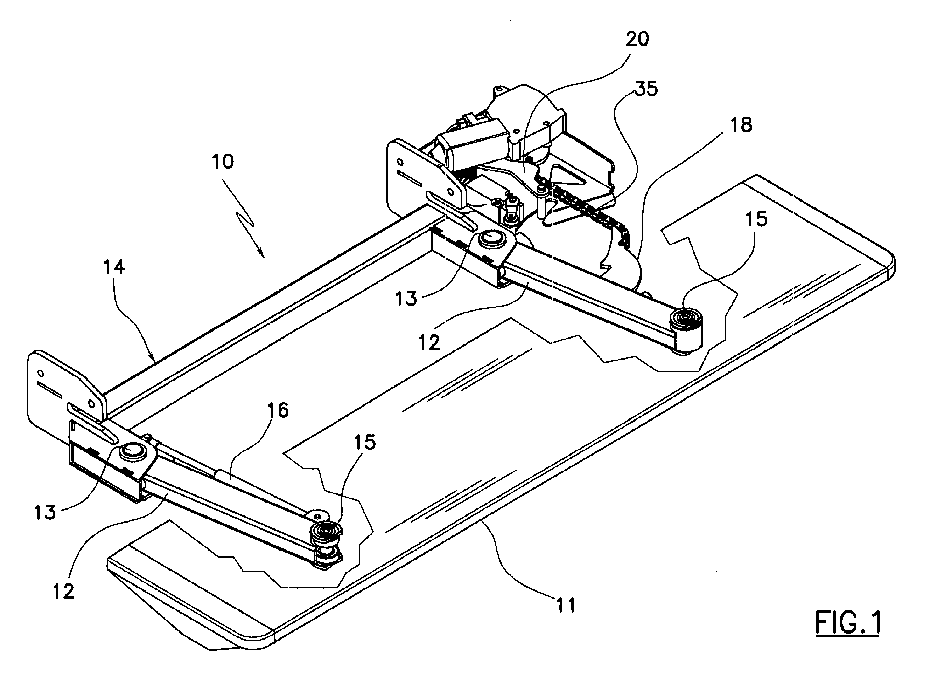

Figure 1 is a perspective view of the tread (separated from the vehicle).
Figure 2 is a plan view of the tread, with the tread in a projecting position from the vehicle.
Figure 3 is the same view as in figure 2, with the tread in a retracted position.

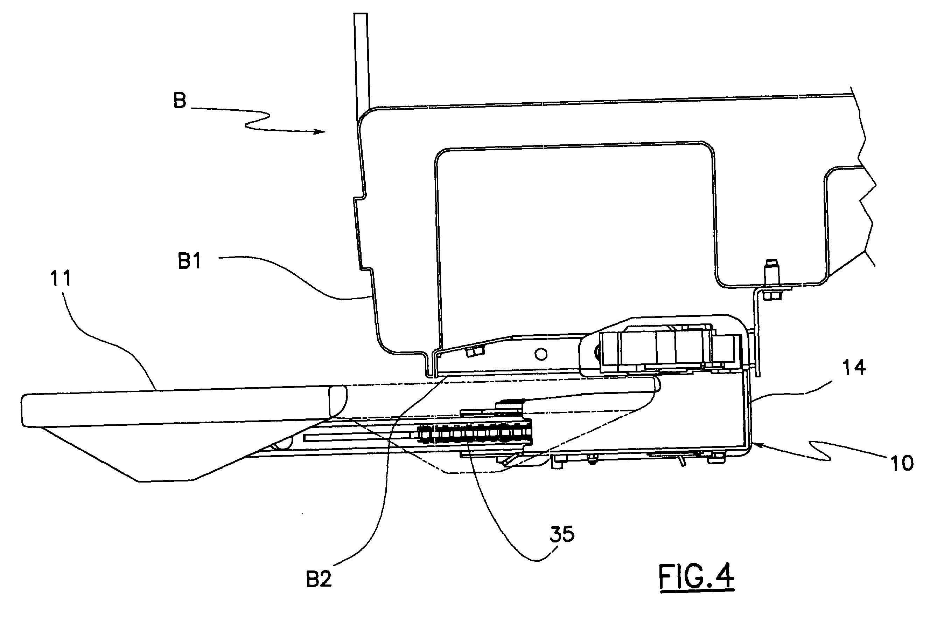

Figure 4 is a lateral view, in vertical elevation, of the tread of figure 2, applied to a vehicle.
Figure 5A is a plan view of the means for activating the tread, with the tread in the retracted position.
Figure 5B is a view as in figure 5A, with the tread in a starting position of movement thereof towards the projecting position.
Figure 5C is a view as in figure 5A, with the tread in a projecting position.
Figure 5D is a view as in figure 5A, with the tread in a stage of return towards the retracted position.

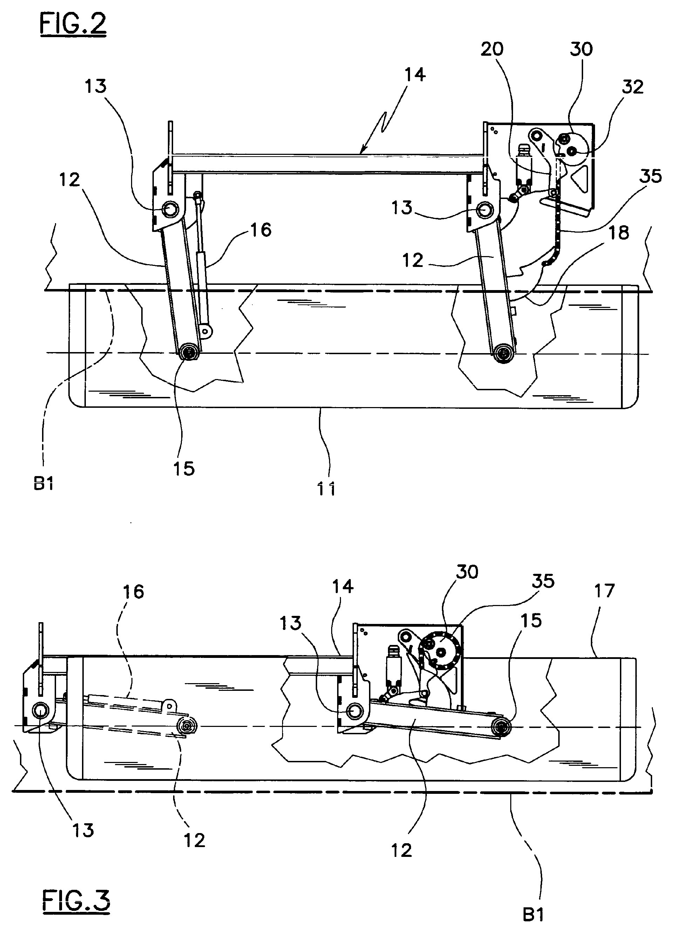

The step of the invention, denoted in its entirety by 10, comprises a tread 11, which is constrained to the vehicle (denoted by B and illustrated only partially) such as to be mobile between a projecting position (illustrated in figure 2) beyond the perimeter of the vehicle B, and a retracted position (illustrated in figure 3) internally of the perimeter of the vehicle B.

In particular, the tread 11 is constrained to two parallel oscillating levers 12, such as to define a four-bar linkage, where the oscillation of the levers determines the movement of the tread between the projecting and retracted positions.

In detail, in the embodiment illustrated in the figures, the two levers 12 are hinged, by pins 13 with vertical axes, to a support frame 14, which is solidly fixed to a lower surface B2, located in the lower part of the vehicle B, which pins 13 face downwards, such that when the tread 11 is in the retracted position it does not project from the flank B1 of the vehicle. The tread 11 is in turn hinged to the second end of the levers 12 by pins 15 having vertical axes. When the tread 11 is in the projecting position, the levers 12 have an almost perpendicular orientation to the vertical surface B1 of the vehicle; they form a relatively small angle with the perpendicular. When instead the tread 11 is in a retracted position, the levers 12 are almost parallel to the surface B1. In order to be brought from one position into another the levers 12 move through an angle of almost 90 degrees.

First means are comprised to bring the tread into the projecting position. In particular, the first means are spring means 16, which provide a continuous thrust, applied between one of the levers 12 and the support frame 14. The spring means 16 are preferably a gas spring or the like, comprising a longitudinal telescopic cover containing a pressurised gas and having an end hinged to the frame 14 and the other end hinged to a lever 12, close to the second end of the lever 12. The longitudinal axis of the spring 16 forms a relatively small angle with the lever 12; when the tread 11 moves into the retracted position the spring 16 compresses, while when the tread 11 moves into the projecting position the spring 16 lengthens. Thus the thrust of the gas internally of the cover tends to push the levers 12 continuously towards the projecting position.

The geometry of the mechanism of the step and the spring 16 is such that in the first part of the rotation of the levers 12, directed towards the projecting position, if the tread encounters an obstacle, the reaction produced thereby, necessary for overcoming the thrust action of the spring 16, need only be relatively small; on the contrary, when the tread is in a projecting position, or almost so, a force is required which is relatively much greater and directed perpendicular to the vertical surface B1 in order to overcome the action of the spring 16; in this second case, the levers 12 are almost perpendicular to the surface B2 and thus the force would produce a rotational torque having a relatively very small lever arm.

Thanks to the above-described geometry, when brought towards the projecting position, the tread does not produce a damaging impact against an obstacle should it encounter one, and thus it will not produce any relevant injury damage to people or things. However, when in the projecting position, a relatively high thrust is required, if directed perpendicular to the vehicle, in order to move the tread 11; thus the tread remains stable and solid against undesired displacements caused by persons rising on or descending from the step.

In the invention, motorised second means are provided for pulling the tread 11 towards the retracted position, against the action of the first means 16, and vice versa to allow the first means 16 to bring the tread 11 into the projecting position.

The invention further comprises hooking means, borne on the support frame 14 in such a position as to be able to hook onto an element 18 of the tread, which is mobile together with the tread 11 when the tread 11 reaches the retracted position, and command means for unhooking the mobile element 18 following a movement of second means in the direction of releasing the tread 11 towards the projecting position.

In particular, the hooking means comprise a further lever 20 thrust constantly towards a fixed position, and the mobile element 18 exhibits a shaped hooking recess 19 destined to cooperate with the hook element 21 of the further lever 20, when the further lever 20 is in a fixed or almost-fixed position.

In more detail the mobiie element 18 is shaped as a small piate which is solidly constrained to one of the levers 12, and has a horizontal development which is shaped such as to define a generally-pointed free end which affords a recess 19, preceded by a shaped profile 19a, in which the hooking element 21 inserts. The further lever 20 oscillates about a vertical-axis rotation pivot 22, and is constantly thrust, by means of an elastic spring 23, towards a fixed position determined by a fixed rest point 24. The hooking element 21 is shaped as a vertical-axis roller element projecting from the further lever 20. The hooking means 20, 21 and the mobile element 18 are in such a geometric relation that when the tread nears the retracted position, the profile 19a enters into contact with the roller 21 (the further lever 20 being in a fixed position against the rest 24) and roller 21 slides along the profile 19a up until it snap-fits into the recess 19 (when the lever 12 reaches the end of the entry run); at this point the element 18 is intercepted by the roller 21 and consequently the lever 12 is mechanically blocked by the further lever 20 and thus cannot rotate towards the tread-projecting position.

The second means, which are destined to pull the tread towards the retracted position, comprise a rotating body 30 which rotates on command about a vertical shaft 32 and a flexible drawing element 35, in particular constituted by an articulated chain, constrained at an end thereof to the body 30 and at the other end thereof to the mobile element 18, which winds about the peripheral surface 31 of the rotating body and is destined to pull the tread into the retracted position.

In particular, the body 30 is a wheel having a spiral peripheral surface 31 having a development of less than 360 degrees.

When the body 30 rotates in the winding direction (in the clockwise direction in the figures), the chain 35 winds on the body 30 and the tread 11 is pulled up to the retracted position.

When the body 30 rotates in the unwinding direction (in the anticlockwise direction in the figures), the chain 35 unwinds therefrom until, when the chain 35 is completely unwound, the tread 11 is in the projecting position.

The point at which the chain 35 is constrained to the body 30 is a point located at a minimum distance from the axis of the shaft 32; as the body 30 rotates and the chain 35 winds up on it, the radius of the body 30 at the point in which the chain winds continually increases. Thanks to this geometry, when the tread 11 is in the completely projecting position, the lever arm with which the body 30 rotates is at its lowest value, and this facilitates overcoming the reaction torque produced by the spring 16 which, in that position, exhibits a maximum value. Conversely, as the tread progressively moves towards the retracted position, the torque of the reaction of the spring 16 diminishes and the radius of the chain 35 correspondingly and advantageously increases.

When the chain 35 is completely unwound, the further lever 20 is in a fixed position against the rest 24, while when the tread moves into the retracted position the element 18 is intercepted by the roller 21 as described above. The command means destined to unhook the mobile element 18 comprises a strike element 41 (in particular constituted by a vertical-axis idle roller) borne by the rotating body 30 in an eccentric position with respect to the shaft 32; following rotation of the body 30, actuated (in an anticlockwise direction) in order to unroll the chain 35 from the body 30, the movement of the strike element 41 is such as to displace the hooking further lever 20 up until the mobile element 18 is unhooked therefrom.

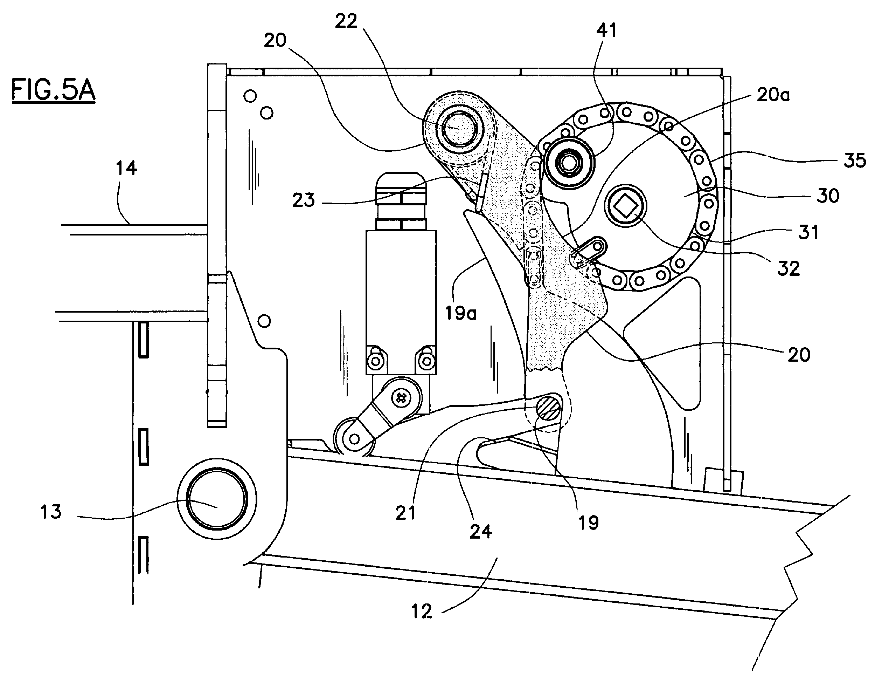

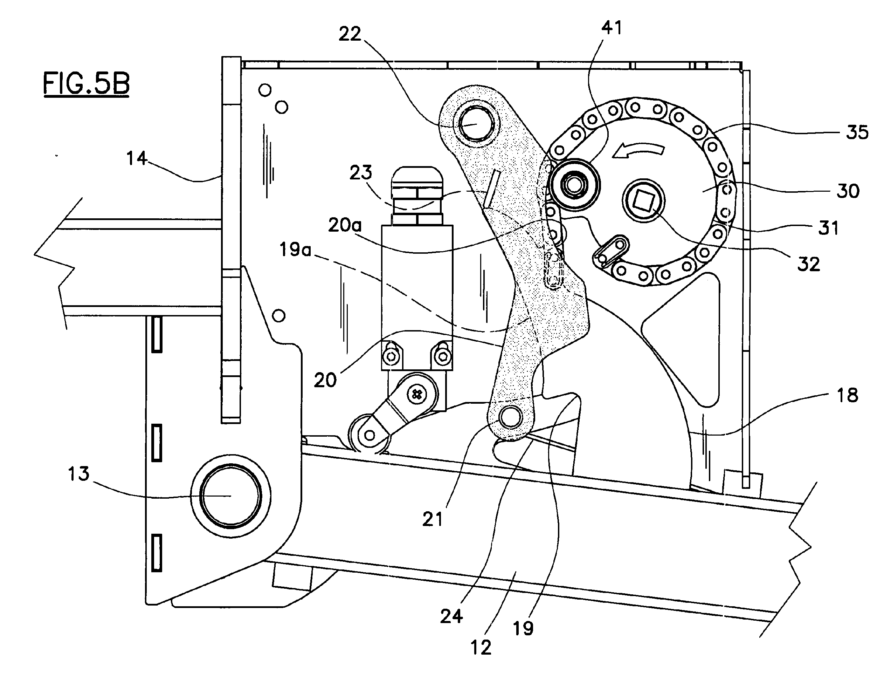

In detail, the further lever 20 exhibits a profiled side 20a, facing towards the rotating body 30, which interferes with the arc of revolution of the roller 41; when the tread 11 is completely retracted, the roller 41 is located at a distance from the side 20a (see figure 5A); however, as soon as the body 30 begins to rotate to unwind the chain 35, the roller 41 comes into contact with the side 20a and pushes against the side 20a to produce a rotation (by a relatively small angle) of the further lever 20 (in a clockwise direction) such that the hooking element 21 is pulled out of the recess 19 and thus the element 18 is freed from the hooked situation with the means for hooking 20, 21 and the tread 11 is thus free to move into the projecting position thanks to the action of the spring 16 (see figure 5B). The side 20a exhibits a specially-shaped profile such as a cam so that as the further lever 20 has been moved by the roller 41 to a sufficient distance from the recess 19, thus enabling the disengagement of the element 21, the further lever 20 maintains this position more or less until the element 18 has been sufficiently distanced from the element 21 towards the projecting position.

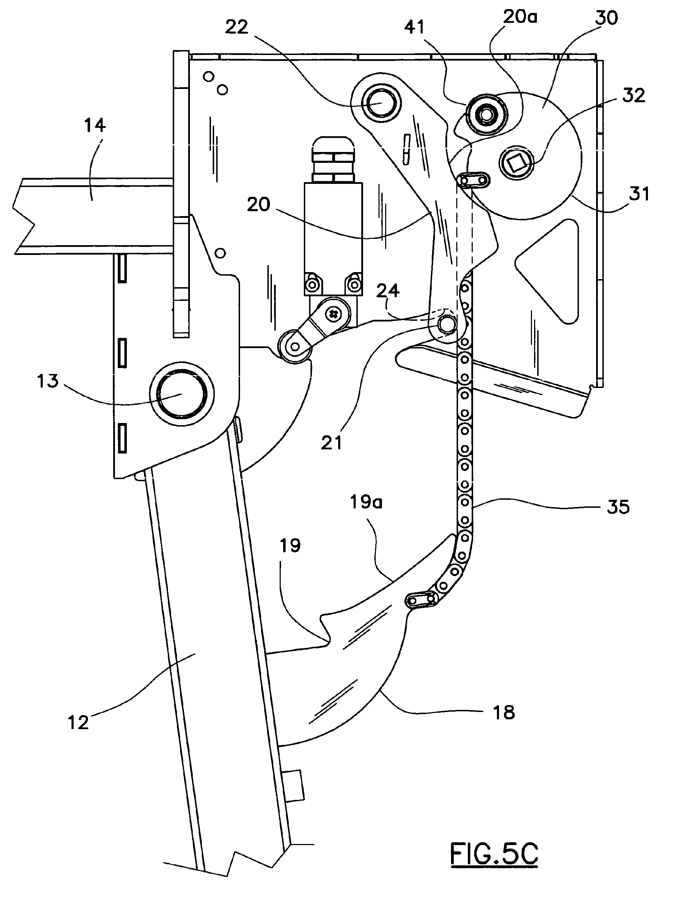

Further, according to the invention the mobile element 18 is fixed to a lever 12 such as to project laterally therefrom and the chain 35 is connected in proximity of the end of the element 18 itself, such as to increase the lever arm with which the rotating body 30 pulls the lever 12 towards itself, via the chain 35 (see figure 5C).

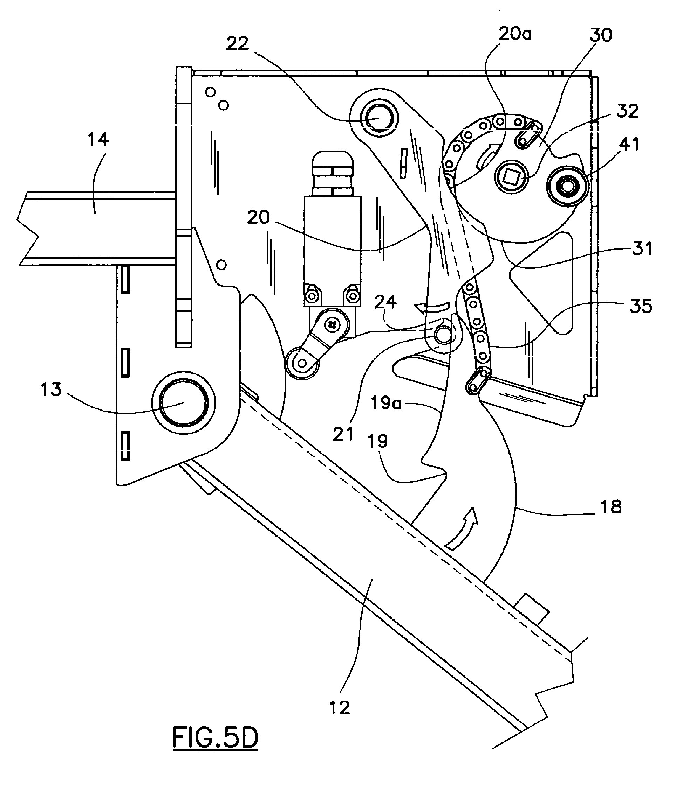

In the displacement of the tread 11 towards the retracted position, first the pointed end of the element 18 passes the hook element 21 upwards and right-wards, which hook element 21 comes into contact with the surface 19a (figure 5D); then the element 21 slides along the surface 19a, contemporaneously displacing the lever 20 up until it snap-fits into the recess 19 where it achieves the mechanical hooking of the lever 12 in the retracted position.

Thanks to the invention, the retracted position of the tread is made stable due to the described mechanical means which hook the element 18 and maintain the position thereof even in the absence of electrical energy.

The retracted position of the tread is therefore guaranteed also in a case of breakage of the activating means (in particular the hook 35) for pulling the tread into the retracted position.

All of the foregoing is very advantageous for preventing the tread from exiting from the vehicle during movement thereof, which would constitute a grave danger for pedestrians.

Further, also in a case in which the tread is manually pushed into the retracted position, the hooking still takes place between the element 18 and the hooking means 20, 21 which operate mechanically thanks to only the action of the spring 23; this happens even if the chain 35 is not wound bout the body 30. This is especially useful if the vehicle loses its electricity supply; in this case the tread can easily be returned manually, by pushing the tread in a horizontal direction more or less parallel to the surface B1 of the vehicle; in this direction a strong force is not necessary in order to overcome the thrust of the spring 16.

Finally thanks to the described geometry of the means for pulling the tread towards the retracted position against the action of the spring 16, it is not necessary to supply the rotating body 30 with much torque, thus requiring application of much less electrical energy.

Obviously numerous modifications of a practical-applicational nature can be brought to the invention, without its forsaking the ambit of the inventive idea as claimed herein below.

## Claims

1. A mechanised retracting step for motor vehicles, comprising a tread (11) constrained to the vehicle such as to be mobile between a projecting position outside a perimeter of the vehicle, and a retracted position within the perimeter of the vehicle, comprising:first means (16) for pushing the tread (11) into the projecting position,
second means (30, 35) which are motorised and destined to pull the tread (11) towards the retracted position against an action of the first means (16), and vice versa to allow the first means (16) to move the tread (11) into the projecting position,
hooking means (20, 21) for engaging an element (18) of the tread (11), which is mobile with the tread (11), when the tread (11) reaches the retracted position thereof,
and a command means for unhooking the mobile element (18) following a movement of the second means (30,35) in a releasing direction of the tread (11) towards the projecting position,
**characterised in that** the second means comprise a body (30) which rotates on command and a flexible drawing element (35), constrained to the mobile element (18), which winds about a peripheral surface of the rotating body (30), and which is destined to pull the tread (11) into the retracted position thereof.

2. The step of claim 1, wherein the tread (11) is constrained to two parallel oscillating levers (12) such as to define a four-bar linkage, oscillation of the levers (12) determining the projecting position and the retracted position of the tread (11).

3. The step of claim 1, wherein the means for hooking comprises a further lever (20) pushed constantly towards a fixed position, and the mobile element (18) exhibits a hooking recess which is destined to cooperate in a snap-fit association with a hooking element (21) of the further lever (20), when the further lever (20) is in the fixed position or almost in the fixed position.

4. The step of claim 1, wherein the the body 30 is a wheel having a spiral peripheral surface 31, such that ,when the body 30 rotates in the winding direction the chain 35 winds on the body 30 and the tread 11 is pulled up to the retracted position, and when the body 30 rotates in the unwinding direction the chain 35 unwinds until, the tread 11 is in the projecting position.

5. The step of claim 1, wherein:
the point at which the chain 35 is constrained to the body 30 is a point located at a minimum distance from the rotation axis of the body 30, and as the body 30 rotates and the chain 35 winds up on it, the radius of the body 30 at the point in which the chain winds continually increases;
when the tread 11 is in the completely projecting position, the lever arm with which the body 30 rotates is at its lowest value,

6. The step of claim 4, wherein the command means comprise a striker element (41) borne by the rotating body (30), which displaces the hooking further lever (20) up until the mobile element (18) unhooks from the lever (20) following rotation of the rotating body (30).

7. The step of claim 4, wherein the mobile element (18) is fixed to an oscillating lever (12) laterally projectingly therefrom and the flexible element (35) is connected in proximity of the end of the element (18) itself, such as to increase a lever arm with which the rotating body (30) pulls the lever (12) towards the rotating body (30) by means of the flexible element (35).

## Patentansprüche

1. Eine mechanisch ausfahrbare Trittstufe für Kraftfahrzeuge, einschließlich einer Trittfläche (11), die so an dem Fahrzeug angebracht ist, dass sie sich zwischen einer ausgefahrenen Stellung außerhalb des Umfangs des Fahrzeuges und einer eingefahrenen Stellung innerhalb des Umfangs des Fahrzeuges bewegen kann, einschließlich: erster Mittel (16) zum Schieben der Trittfläche (11) in die ausgefahrene Stellung,
zweiter, motorbetriebener Mittel (30, 35), welche die Trittfläche (11) entgegen der Einwirkung der ersten Mittel (16) in die eingefahrene Stellung ziehen und es den ersten Mitteln (16) ermöglichen, die Trittfläche (11) entgegen der Einwirkung der zweiten Mittel in die ausgefahrene Stellung zu bewegen.
Verhakungsmitteln (20, 21) zum Anbringen eines Elements (18) der Trittfläche (11), das sich mit der Trittfläche (11) bewegen lässt, wenn die Trittfläche (11) die eingefahrene Stellung erreicht,
und eines Befehlsmittels zum Lösen des beweglichen Elements (18) infolge einer Bewegung der zweiten Mittel (30, 35) in eine Ausklinkrichtung der Trittstufe (11) hin zur ausgefahrenen Stellung.
**dadurch gekennzeichnet, dass** die zweiten Mittel einen Körper (30) beinhalten, der sich auf Befehl dreht und ein flexibles Ziehelement (35), das an dem beweglichen Element (18) angebracht ist, welches sich auf eine äußere Fläche des Drehkörpers (30) wickelt und dazu dient, die Trittfläche (11) in die eingefahrene Stellung zu ziehen.

2. Die Trittstufe nach Patentanspruch 1, wobei die Trittfläche (11) an zwei parallelen Schwinghebeln (12) angebracht ist, wodurch eine Vier-Stangen-Verbindung entsteht und wobei die Schwingung der Hebel (12) die ausgefahrene und eingefahrene Stellung der Trittfläche (11) bewirkt.

3. Die Trittstufe nach Patentanspruch 1, wobei die Verhakungsmittel einen weiteren Hebel (20) beinhalten, der konstant in eine feste Stellung geschoben wird, und das bewegliche Element (18) eine Aussparung aufweist, welche mit einem Hakenelement (21) des weiteren Hebels (20) in einer Schnappverschlussverbindung zusammenwirkt, wenn sich der weitere Hebel (20) in fester Stellung oder fast in fester Stellung befindet.

4. Die Trittstufe nach Patentanspruch 1, wobei der Körper 30 ein Rad mit einer spiralförmigen Außenfläche 31 ist, so dass sich bei Drehung des Körpers 30 in Aufspulrichtung die Kette 35 auf den Körper 30 wickelt und die Trittstufe 11 in die eingefahrene Stellung gezogen wird, und sich bei Drehung des Körpers 30 in Abspulrichtung die Kette 35 abwickelt, bis sich die Trittfläche 11 in ausgefahrener Stellung befindet.

5. Die Trittstufe nach Patentanspruch 1, wobei:
Der Punkt, an dem die Kette 35 um den Körper 30 gewickelt wird, ein in geringster Entfernung zur Rotationsachse des Körpers 30 befindlicher Punkt ist und sich bei Drehung des Körpers 30 und Aufwicklung der Kette 35 der Radius des Körpers 30 an dem Punkt, an dem sich die Kette aufwickelt, kontinuierlich anwächst;
Wenn sich die Trittstufe in der komplett ausgefahrenen Stellung befindet, steht der Hebelarm, mit dem sich der Körper 30 dreht, auf dem niedrigsten Wert.

6. Die Trittstufe nach Patentanspruch 4, wobei die Befehlsmittel ein Ausrückelement (41) auf dem Drehkörper (30) beinhalten, das den weiteren Hakenhebel (20) nach oben bewegt, bis sich das bewegliche Element (18) infolge einer Drehung des Drehkörpers (30) aus dem Hebel (20) aushakt.

7. Die Trittstufe nach Patentanspruch 4, wobei das bewegliche Element (18) an einem daraus seitlich herausstehenden Schwinghebel (12) befestigt ist und das flexible Element (35) nahe dem Ende des Elements (18) zur Erhöhung eines Hebelarms angeschlossen ist, mit welchem der Drehkörper (30) den Hebel (12) über das flexible Element (35) zum Drehkörper (30) zieht.

## Revendications

1. Une marche escamotable mécanique pour véhicules à moteur, comprenant un giron (11) relié au véhicule de manière à être mobile entre une position sortie hors du périmètre du véhicule et une position rentrée dans le périmètre du véhicule, comprenant :
un premier dispositif (16) pour pousser le giron (11) dans la position sortie,
un deuxième dispositif (30, 35) motorisé et destiné à tirer le giron (11) vers la position rentrée contre une action du premier dispositif (16) et inversement pour permettre au premier dispositif (16) de déplacer le giron (11) dans la position sortie,
un dispositif d'accrochage (20, 21) pour engager un élément (18) du giron (11), qui est mobile avec le giron (11), lorsque le giron (11) atteint sa position rentrée,
et un dispositif de commande pour décrocher l'élément mobile (18) après un mouvement du deuxième dispositif (30, 35) dans une direction de libération du giron (11) vers la position sortie,
**caractérisé par le fait que** le deuxième dispositif comprend un corps (30) qui pivote sur commande et un élément de traction flexible (35), relié à l'élément mobile (18),
qui s'enroule autour d'une surface périphérique du corps rotatif (30) et qui est destiné à tirer le giron (11) dans sa position rentrée.

2. La marche selon la revendication 1, où le giron (11) est relié à deux leviers oscillants parallèles (12) de manière à définir un quadrilatère articulé, l'oscillation des leviers (12) déterminant la position sortie et la position rentrée du giron (11).

3. La marche selon la revendication 1, où le dispositif d'accrochage comprend également un levier supplémentaire (20) constamment poussé vers une position fixe et où l'élément mobile (18) présente un creux d'accrochage qui est destiné à coopérer en association par emboîtement avec un élément d'accrochage (21) du levier supplémentaire (20), lorsque le levier supplémentaire (20) se trouve en position fixe ou presque en position fixe.

4. La marche selon la revendication 1, où le corps 30 est une roue ayant une surface périphérique en spirale 31, de sorte que, lorsque le corps 30 tourne dans la direction d'enroulement, la chaîne 35 s'enroule sur le corps 30 et le giron 11 est tiré vers la position rentrée, et lorsque le corps 30 tourne dans la direction de déroulement, la chaîne 35 se déroule jusqu'à ce que le giron 11 se trouve en position sortie.

5. La marche selon la revendication 1, où :
le point auquel la chaîne 35 est reliée au corps 30 est un point située à une distance minimale de l'axe de rotation du corps 30 et lorsque le corps 30 pivote et que la chaîne 35 s'y enroule, le rayon du corps 30 au point où la chaîne s'enroule augmente continuellement ;
lorsque le giron 11 est dans la position complètement sortie, le bras du levier avec lequel le corps pivote est à sa valeur la plus basse.

6. La marche selon la revendication 4, où le dispositif de commande comprend un élément heurtoir (41) porté par le corps rotatif (30), qui déplace le levier d'accrochage supplémentaire (20) vers le haut jusqu'à ce que l'élément mobile (18) se décroche du levier (20) après la rotation du corps rotatif (30).

7. La marche selon la revendication 4, où l'élément mobile (18) est fixé à un levier oscillant (12) qui se projette latéralement de ce dernier et l'élément flexible (35) est connecté à proximité d'une extrémité de l'élément (18) même, de manière à augmenter un bras de levier avec lequel le corps rotatif (30) tire le levier (12) vers le corps rotatif (30) à l'aide de l'élément flexible (35).
